# EUROPEAN PATENT SPECIFICATION

(11) **EP 2 028 086 B1**
(45) Date of publication and mention of the grant of the patent: **07.09.2011**
(21) Application number: 08162853.9
(22) Date of filing: 22.08.2008
(51) Int. Cl.: B62D 59/04

(54) **Auxiliary drive**
Hilfsantrieb
Boîte auxiliaire

(30) Priority: 23.08.2007 NL 2000830
(43) Date of publication of application: 25.02.2009
(73) Proprietor: Reich GmbH, 35713 Eschenburg (DE)
(72) Inventor: Bender, Steffen, D-35713, Eschenburg (DE)
(74) Representative: van Westenbrugge, Andries

(56) References cited:
- EP-A- 1 394 024
- GB-A- 2 436 824
- US-A- 3 783 960

## Description

The present invention relates to an auxiliary drive for a non-driven vehicle according to the preamble of Claim 1.

An auxiliary drive of this type is known from EP-1,394,024A2. In this case, a main motor is present which is connected to a drive roller and is mounted on a displaceable frame. The frame is moved with respect to the other part of the structure by means of the same motor, as a result of which the roller can optionally be brought into engagement with the wheel.

In British application 2,436,824, which is not a prior publication, a central drive motor is present which can be moved so that it can be brought into engagement with a drive roller for a wheel or with a construction for controlling the level of the vehicle in question.

It is an object of the invention to develop an auxiliary drive of this type further in such a manner that it allows for these further possible applications.

This object is achieved by an auxiliary drive which has the features according to Claim 1.

According to the present invention, the motor is provided in the conventional manner with a reduction gear unit and driving feature, such as a drive roller. However, in addition to these parts, a power take-off is present at either the motor or the reduction gear. Such a power take-off has to be distinguished from a prior-art construction in which use is made of a single motor with a transmission in which the drive roller can be mounted on either side of the output shaft of the transmission. In such a case, a shaft end, which is not used effectively, protrudes from the "other" side of the reduction gear and is sealed with a cap in the prior art. According to the invention, the power take-off can be used for any purpose where a displacement is preferably to be carried out in a mechanical way.

By way of non-limiting example, the displacement of the motor with respect to the auxiliary frame in order to produce an engagement connection between the motor and the wheel is mentioned. Another instance in which the power take-off can be used is when only accessories are driven, that is to say the auxiliary drive itself is not used, neither when rotating the wheel, nor when displacing, for example, a drive roller to **such** wheel. By way of example, the displacement of the supports provided on the trailer for positioning the trailer in a stable **condition** is mentioned. An example thereof are legs by means of which a caravan or the like can be brought to a stable position. Displacement of such legs may be carried out in a purely mechanical manner, but also in a hydraulic manner. In any case, the power which is required therefor can be provided by the power take-off of the motor/reduction gear unit.

It will be understood that numerous further examples are conceivable, by means of which any device can be driven by means of the motor take-off which differs from the rotary driving of the wheel of the trailer in question.

Such a power take-off can be mounted on either the motor or the reduction gear. The power take-off preferably comprises a shaft protruding from the respective part which is optionally provided with a gear wheel for further transfer of power.

The motor/reduction gear unit can be arranged so that it can be displaced both linearly with respect to the auxiliary frame and pivoted or displaced in any other conceivable way with respect to the auxiliary frame.

Preferably, the displacement of the motor with respect to the trailer is used in order to activate the power take-off, if desired. That is to say that, in one embodiment of the invention, a coupling with a further part to be driven is only possible if the motor/reduction gear unit is not placed against the tyre of the wheel or causes rotation thereof in another way. This means that the power take-off is active in the position in which the motor/reduction gear unit is removed from the tyre. If desired, it is possible to provide a particular position, that is to say that the motor/reduction gear unit can be placed in three positions, i.e. a non-operative position, a position which is effective for the power take-off and a position which is effective for the wheel to be driven.

In addition, it is possible to use couplings between the power take-off and the part to be driven. Such couplings may be electrical or manual.

According to a variant of the invention, the centre axis of the shaft of the power take-off runs parallel to the centre axis of the driving feature, such as a drive roller.

According to another variant of the invention, the centre axis of the shaft of the power take-off **extends** parallel to the axis of rotation of the motor. More particularly, it **extends** parallel to the direction of displacement of the motor with respect to the chassis of the trailer. In this manner, it is possible to provide the above-described coupling with the power take-off by displacement of the motor/reduction gear unit. By moving the motor/reduction gear unit to a position out of engagement with the wheel, the motor/reduction gear unit and more particularly the shaft of the power take-off arranged thereon, can be brought into engagement with any part to be driven.

More generally, the present invention makes decoupling of a power take-off possible if the motor is used for actively driving a wheel, that is to say acts as an auxiliary drive, and makes coupling with the power take-off possible if such a drive is not present. By moving the drive mechanism away from and towards the wheel (one of the ways of driving the wheel), it is possible to provide such coupling/decoupling. In this case, use can be made of gear wheels, toothed belts, belts and the like which become operational as a result of displacement.

The invention also relates to a motor/reduction gear unit for an auxiliary drive which is **embodied** in the above-described manner. In addition, the invention relates to a trailer provided with an above-described auxiliary drive and level-controlling means for a caravan or trailer provided with a power connection which can be coupled to the above-described power take-off.

The invention will be described below with reference to an exemplary embodiment illustrated in the drawing, in which:
Fig. 1 diagrammatically shows an auxiliary drive and a part of a trailer in which it can be used; and
Fig. 2 shows a variant of the construction shown in Fig. 1.

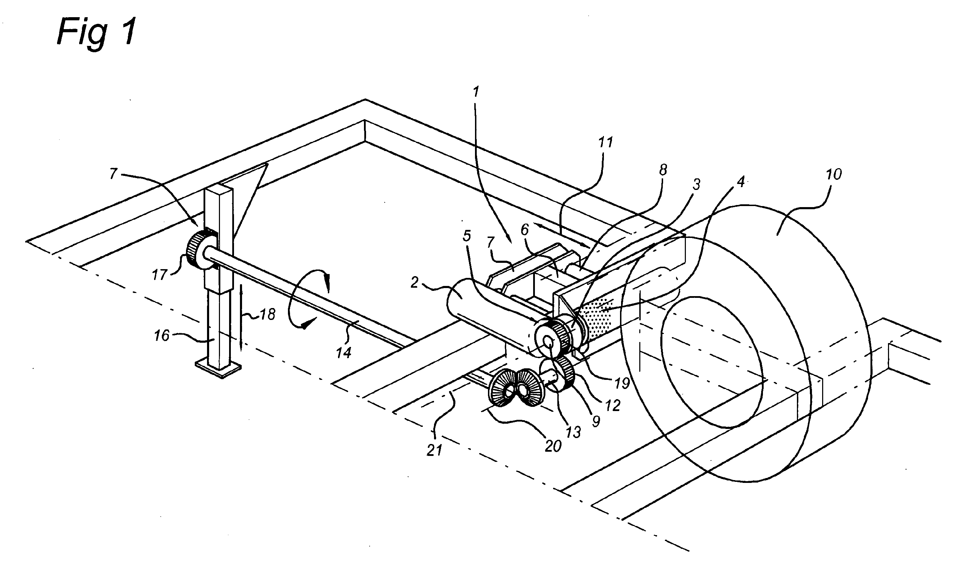

Fig. 1 illustrates a part of a trailer comprising a wheel (tyre) 10 which is to be driven by means of an auxiliary drive according to the present invention which is denoted overall by reference numeral 1. This auxiliary drive comprises a drive motor 2, a transmission/reduction gear 3 and a drive roller 4 driven by the reduction gear. This drive roller 4 can, together with the motor/reduction gear unit 2/3, be displaced with respect to the wheel into an engagement position and a free position. This displaceability is achieved by means of a carriage 6 which can be displaced in the direction of arrow 11 towards and away from the wheel 10 across an auxiliary frame 7 which is attached to the chassis of the caravan in a way which is not shown in any more detail. All this is carried out using a guide 8.

The centre axis of the drive roller is denoted by reference numeral 21.

According to the present invention, the reduction gear 3 is provided with a power take-off 5 which comprises a shaft 9 on which a gear wheel 19 is mounted. The centre axis starting from 9 is denoted by reference numeral 21 and centre axis 21 extends parallel to centre axis 20. When the carriage 6 is positioned correctly, gear wheel 19 can be brought into engagement with a gear wheel 12 on a shaft 13. By means of a structure (not shown in any more detail), a shaft 14 can thus be driven which actuates a drive 7 for operating a level-control mechanism comprising a leg 16. This leg 16 can be placed on the ground in the direction of the line 18, resulting in a stable positioning of the trailer (possibly for changing a wheel).

Using the construction shown in Fig. 1, it is not only possible to drive wheel 10, but also to activate leg 16 or to pull it in, respectively, when the carriage 6 is positioned correctly.

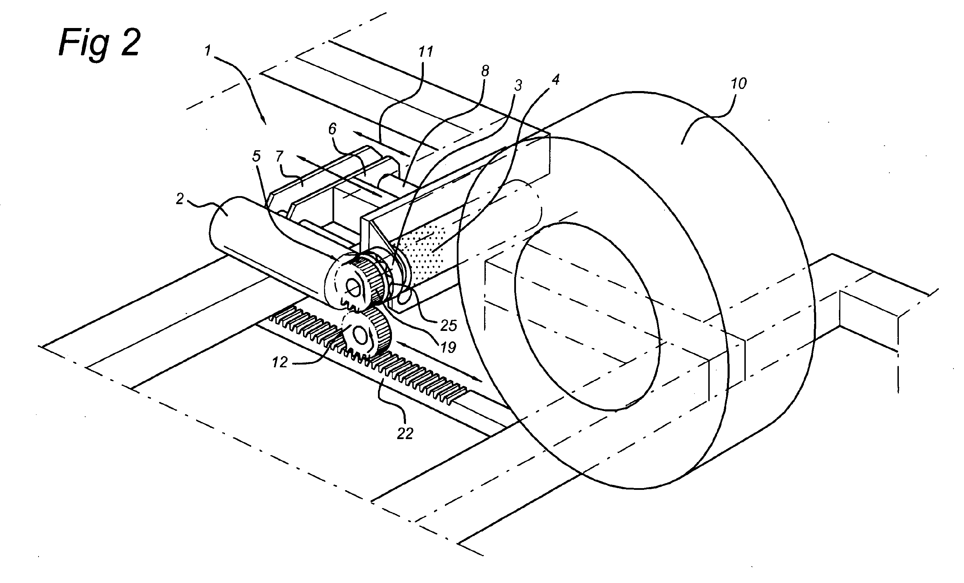

Fig. 2 shows a variant of the invention. In this case, too, there is an auxiliary drive 1 comprising a motor 2 and transmission 3 with roller 4 **embodied** to be brought into engagement with wheel 10, if desired. A power take-off is denoted by reference numeral 5 and is provided with a gear wheel 19. In this example, the gear wheel 19 is **arranged** to come into engagement with a rack 22 via pinion 12, as a result of which carriage 6, on which the motor reduction gear unit 2/3 is mounted, is displaced with respect to the auxiliary frame 7. If desired, a particular construction can be present, for example comprising a coupling 25 in order to be able to decouple the movement of power take-off 5 from the rotation of roller 4. Such a coupling 25 can also be provided in shaft 13. A coupling of this type may be operated electrically or manually and/or be **realised** as a slip coupling.

Upon reading the above, those skilled in the art will immediately think of further applications in order to make use of the power of the motor 2, optionally in combination with the reduction gear 3 for driving further parts of a trailer. This drive may comprise any suitable pump (liquid/gas) as well as any other constructions which produce a mechanical displacement.

In general, both the left-hand side and the right-hand side of a trailer will be provided with auxiliary drives. According to the present invention, it is possible to provide both with a power take-off of this type.

## Claims

1. Auxiliary drive (1) for a non-driven vehicle, comprising a frame (7), a displaceable carrier (6) which is mounted on said frame so that it can be displaced, a drive unit which is connected to said carrier and comprising a drive motor (2), a reduction gear (3) and a drive element (4) for a wheel which drive element (4) is permanently connected to said drive motor, a power take-off (5) being present which extends from said drive unit, coupled to said drive motor (2), **characterized in that** said power take-off is arranged to drive an accessory which does not relate to said auxiliary drive.

2. Auxiliary drive according to Claim 1, wherein said power take-off is mounted on said reduction gear (3).

3. Auxiliary drive according to one of the preceding claims, wherein said power take-off comprises a rotary shaft (9) protruding from the drive unit.

4. Auxiliary drive according to one of the preceding claims, wherein said power take-off comprises a gear wheel (5) protruding from the drive unit.

5. Auxiliary drive according to one of the preceding claims, wherein said power take-off is arranged for displacing said carrier (6) with respect to the frame (7).

6. Auxiliary drive according to Claim 5, wherein said carrier is mounted so that it can be linearly displaced with respect to the frame.

7. Auxiliary drive according to Claim 5 or 6, wherein said carrier is mounted so that it can be pivotably displaced with respect to the frame.

8. Auxiliary drive according to one of the preceding claims, wherein said power take-off is connected to said drive motor so that it can be coupled in such a manner that when the drive element (14) is active, a wheel is decoupled and when the drive element (14) is not active, said wheel is coupled.

9. Auxiliary drive according to one of the preceding claims in combination with Claim 3, wherein the centre axis (21) of said shaft extends parallel to the centre axis (20) of said drive element.

10. Trailer provided with an auxiliary drive according to one of Claims 1-9, comprising displaceable, level-controlling means (15), **characterized in that** said power take-off (5) drives said level-controlling means (15).

11. Trailer according to claim 12, wherein said level-controlling means (15) for a caravan or a trailer comprise a part which can be displaced between a non-active, unextended position and an active, extended position, which part is provided with a power connection, which can be coupled to a power take-off, which extends from a drive unit of an auxiliary drive for said caravan or trailer.

## Patentansprüche

1. Hilfsantrieb (1) für ein antriebsloses Fahrzeug, wobei der Hilfsantrieb aufweist: einen Rahmen (7), einen verschiebbaren Träger (6), der an dem Rahmen verschiebbar angebracht ist, eine Antriebseinheit, die mit dem Träger verbunden ist und einen Antriebsmotor (2), ein Untersetzungsgetriebe (3) und ein Antriebselement (4) für ein Rad aufweist, wobei das Antriebselement (4) mit dem Antriebsmotor permanent verbunden ist und wobei ein Nebenantrieb (5) vorhanden ist, der sich von der Antriebseinheit weg erstreckt und mit dem Antriebsmotor (2) gekoppelt ist,
**dadurch gekennzeichnet,**
**daß** der Nebenantrieb zum Antreiben einer Zubehöreinrichtung ausgebildet ist, die nicht mit dem Hilfsantrieb in Beziehung steht.

2. Hilfsantrieb nach Anspruch 1,
wobei der Nebenantrieb an dem Untersetzungsgetriebe (3) angebracht ist.

3. Hilfsantrieb nach einem der vorhergehenden Ansprüche,
wobei der Nebenantrieb eine Drehwelle (9) aufweist, die von der Antriebseinheit vorsteht.

4. Hilfsantrieb nach einem der vorhergehenden Ansprüche,
wobei der Nebenantrieb ein von der Antriebseinheit vorstehendes Zahnrad (5) aufweist.

5. Hilfsantrieb nach einem der vorhergehenden Ansprüche,
wobei der Nebenantrieb zum Verlagern des Trägers (6) in bezug auf den Rahmen (7) ausgebildet ist.

6. Hilfsantrieb nach Anspruch 5,
wobei der Träger derart angebracht ist, daß er in bezug auf den Rahmen linear verschiebbar ist.

7. Hilfsantrieb nach Anspruch 5 oder 6,
wobei der Träger derart angebracht ist, daß er in bezug auf den Rahmen drehbar verlagerbar ist.

8. Hilfsantrieb nach einem der vorhergehenden Ansprüche,
wobei der Nebenantrieb mit dem Antriebsmotor derart verbunden ist, daß er derart koppelbar ist, daß bei aktivem Antriebselement (14) ein Rad abgekoppelt ist und bei nicht aktivem Antriebselement (14) das Rad gekoppelt ist.

9. Hilfsantrieb nach einem der vorhergehenden Ansprüche in Kombination mit Anspruch 3,
wobei sich die Mittelachse (21) der Welle parallel zu der Mittelachse (20) des Antriebselements erstreckt.

10. Anhänger, der mit einem Hilfsantrieb nach einem der Ansprüche 1 bis 9 versehen ist, wobei der Anhänger eine verschiebbare Niveau-Steuereinrichtung (15) aufweist,
**dadurch gekennzeichnet,**
**daß** der Nebenantrieb (15) die Niveau-Steuereinrichtung (15) antriebsmäßig bewegt.

11. Anhänger nach Anspruch 12,
wobei die Niveau-Steuereinrichtung (15) für einen Caravan oder einen Anhänger ein Teil aufweist, das zwischen einer inaktiven, nicht ausgefahrenen Position und einer aktiven, ausgefahrenen Position verlagerbar ist, wobei das Teil mit einer mit einem Nebenantrieb koppelbaren Kraftverbindung versehen ist, die sich von einer Antriebseinheit eines Hilfsantriebs für den Caravan oder Anhänger weg erstreckt.

## Revendications

1. Boîte auxiliaire (1) pour un véhicule non entraîné, comprenant un cadre (7), un support mobile (6) monté sur ledit cadre de manière à pouvoir être déplacé, une unité d'entraînement reliée audit support et comprenant un moteur d'entraînement (2), un engrenage réducteur (3) et un élément menant (4) dévolu à une roue, lequel élément menant (4) est en liaison permanente avec ledit moteur d'entraînement, une prise de force (5), partant de ladite unité d'entraînement, étant couplée audit moteur d'entraînement (2), **caractérisée par le fait que** ladite prise de force est agencée pour entraîner un élément accessoire sans relation avec ladite boîte auxiliaire.

2. Boîte auxiliaire selon la revendication 1, dans laquelle ladite prise de force est montée sur ledit engrenage réducteur (3).

3. Boîte auxiliaire selon l'une des revendications précédentes, dans laquelle ladite prise de force comprend un arbre rotatif (9) faisant saillie au-delà de l'unité d'entraînement.

4. Boîte auxiliaire selon l'une des revendications précédentes, dans laquelle ladite prise de force comprend une roue dentée (5) faisant saillie au-delà de l'unité d'entraînement.

5. Boîte auxiliaire selon l'une des revendications précédentes, dans laquelle ladite prise de force est agencée pour déplacer ledit support (6) vis-à-vis du cadre (7).

6. Boîte auxiliaire selon la revendication 5, dans laquelle ledit support est monté de manière à pouvoir être animé de mouvements linéaires vis-à-vis du cadre.

7. Boîte auxiliaire selon la revendication 5 ou 6, dans laquelle ledit support est monté de manière à pouvoir être animé de mouvements pivotants vis-à-vis du cadre.

8. Boîte auxiliaire selon l'une des revendications précédentes, dans laquelle ladite prise de force est reliée audit moteur d'entraînement pour pouvoir être couplée de façon telle qu'une roue soit désaccouplée lorsque l'élément menant (14) est opérant, et que ladite roue soit accouplée lorsque ledit élément menant (14) est inopérant.

9. Boîte auxiliaire selon l'une des revendications précédentes, en combinaison avec la revendication 3, dans laquelle l'axe médian (21) dudit arbre s'étend parallèlement à l'axe médian (20) dudit élément menant.

10. Remorque équipée d'une boîte auxiliaire conforme à l'une des revendications 1-9, comprenant des moyens mobiles (15) de commande de niveaux, **caractérisée par le fait que** ladite prise de force (5) entraîne lesdits moyens (15) de commande de niveaux.

11. Remorque selon la revendication 10, dans laquelle lesdits moyens (15) de commande de niveaux, affectés à une caravane ou à une remorque, comprennent une partie pouvant être déplacée entre une position inopérante non déployée, et une position opérante déployée, laquelle partie est munie d'un raccord de puissance pouvant être couplé à une prise de force partant d'une unité d'entraînement d'une boîte auxiliaire destinée à ladite caravane ou remorque.
